## Europäisches Patentamt

## European Patent Office

## Office européen des brevets

(19)

(11) Veröffentlichungsnummer: **0 080 434**
**B1**

(12)

# EUROPÄISCHE PATENTSCHRIFT

(45) Veröffentlichungstag der Patentschrift:
**09.04.86**

(51) Int. Cl.⁴: **B 01 D 15/00, C 08 F 6/12**

(21) Anmeldenummer: **82810495.0**

(22) Anmeldetag: **18.11.82**

(54) **Verfahren zur Reinigung von organischen Lösungen.**

(30) Priorität: **24.11.81 CH 7506/81**

(43) Veröffentlichungstag der Anmeldung:
**01.06.83 Patentblatt 83/22**

(45) Bekanntmachung des Hinweises auf die Patenterteilung:
**09.04.86 Patentblatt 86/15**

(84) Benannte Vertragsstaaten:
**CH DE FR GB IT LI NL SE**

(56) Entgegenhaltungen:
**EP - A - 0 042 674**
**DE - A - 1 300 537**
**DE - A - 2 216 624**
**DE - A - 2 653 879**
**US - A - 4 116 820**
**US - A - 4 269 694**

**Kirk-Othmer: Encyclopedia of Chemical Technology, 3. Auflage, Band 4, Seite 566**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Jehle, Nikolaus, Haldenweg 25, CH-4133 Pratteln (CH)**
Erfinder: **Thüer, Markus, Dr., Schwalbenweg 2, CH-4310 Rheinfelden (CH)**
Erfinder: **Losert, Ewald, Habsburgerstrasse 30, CH-4310 Rheinfelden (CH)**

LIBER, STOCKHOLM 1986

## Beschreibung

Die vorliegende Erfindung betrifft ein Verfahren zur adsorptiven Entfernung von lichtempfindlichen photopolymerisierbaren Harzen und gegebenenfalls für diese Harze üblichen Zusätzen aus organischen Lösungen mittels Aktivkohle.

Bei der Verarbeitung von Polymeren fallen oftmals Polymere enthaltende organische Lösungen an. Dies gilt besonders bei der Herstellung von gedruckten Schaltungen, wo im allgemeinen die unbelichteten Teile der lichtempfindlichen Schicht mit organischen Lösungsmitteln bzw. Lösungsmittelgemischen entwickelt werden.

Aus wirtschaftlichen Gründen werden die Lösungsmittel wieder zurückgewonnen, was einfach durch Destillation geschehen kann. Die Destillation hat jedoch wesentliche Nachteile. Der Energieverbrauch ist hoch und es sind spezielle Sicherheitseinrichtungen erforderlich, da die Lösungsmittel oft über ihren Flammpunkt erwärmt werden müssen. Auf den Wärmeaustauschflächen setzt sich ein harzartiger Belag ab, der den Wärmeaustausch behindert und daher entfernt werden muss. Ferner ist die Destillation mit relativ hohen Verlusten verbunden. Bei Lösungsmittelgemischen tritt eine Veränderung des Mischungsverhältnisses ein, die vor der Wiederverwendung korrigiert werden muss.

Aufgabe vorliegender Erfindung ist es, ein Verfahren zur Entfernung von Polymeren aus organischen Lösungen bereitzustellen, das diese Nachteile nicht aufweist.

Gegenstand vorliegender Erfindung ist ein Verfahren zur adsorptiven Entfernung von lichtempfindlichen photopolymerisierbaren Harzen und gegebenenfalls für diese Harze üblichen Zusätzen aus organischen Lösungen, in dem das Harz ein Molekulargewicht von 1 000 bis 500 000 aufweist, und die Lösung 1 bis 150 g des Harzes pro Liter des Lösungsmittels enthält, wobei man die Lösung bei.20 bis 150°C mit 10 bis 500 g Aktivkohle pro Liter des Lösungsmittels in Kontakt bringt und danach das Lösungsmittel isoliert. Die nach dem erfindungsgemässen Verfahren aus Lösungen entfernbaren Harze sind z.B. Polymere, die eine 1,2-substituierte Maleinimidylgruppe enthalten. Solche Polymere sind z.B. in der DE-OS 26 26 769 beschrieben. Eine weitere Gruppe sind z.B. lichtempfindliche Epoxidharze, besonders jene, die Chalkongruppen enthalten, und im allgemeinen zusammen mit einem Härter und/oder Härtungsbeschleuniger eingesetzt werden. Solche sind z.B. in der DE-OS 23 42 407 beschrieben. Als Beispiel sei (4,4'-Glycidoxyphenyl)-vinylketon genannt, das als solches, zusammen mit anderen Epoxidharzen oder als vorreagiertes Epoxidharz eingesetzt werden kann. Ferner sind Homo- und Copolymere geeignet, die Zimtsäurereste enthalten. Eine weitere Gruppe photopolymerisierbarer Substanzen sind Acrylsäure- und/oder Methacrylsäureester und Homo- sowie Copolymere davon mit niedrigem Polymerisationsgrad. Eine weitere bekannte Gruppe sind cyclisierte Rubber-Photoresists, z.B. von cis-1,4-Polyisopren.

Geeignete Lösungsmittel für die Polymeren, die alleine oder in Gemischen eingesetzt werden können sind z.B: Ketone, wie Dimethylketon, Diäthylketon, Methylisobutylketon, Cyclohexanon, Cyclopentanon, Cycloheptanon, Isophoron, Methoxyhexanon, Acetonylaceton, Acetophenon, Benzyläthylketon, 3,3,5-Trimethylcyclohexanon, Mesityloxid; halogenierte Kohlenwasserstoff wie Tetrachlorkohlenstoff, Chloroform, Methylenchlorid, Methylenbromid, Bromchlormethan, 1,2-Dichloräthan, 1,1,2-Trichloräthan, 1,1,2,2-Tetrachloräthan, 1,2,3-Trichlorpropan, Perchloräthylen; Alkohole wie Methanol, Aethanol, Propanol, Butanol, Hexanol, Cyclohexanol, Furfurylalkohol, Tetrahydrofurfurylalkohol, Benzylalkohol, monoalkylierte Glykole wie Methylglykol, Aethylglykol, Methyldiglykol, Aethyldiglykol, Butyldiglykol, Triäthylenglykolmonomethyl-, -monoäthyl- oder -monobutyläther, Glykole wie Aethylen-, Propylen- oder Butylenglykol und deren Oligomere wie Triäthylenglykol; aliphatische und aromatische Kohlenwasserstoffe wie Pentan, Hexan, Cyclohexan, Methylcyclohexan, Benzol, Toluol oder Xylol, Aether wie Diäthyläther. Dibutyläther, Tetrahydrofuran, Dioxan, Aethylenglykoldimethyläther, Diäthylenglykoldimethyläther, Carbonsäureester wie Methyl-, Aethyl-, Propyl-, Butyl- und Isopropyl- sowie Phenylacetat, Propionsäuremethylester, Glykolsäurebutylester, Benzoesäuremethylester, Aethylglykolmono- oder -diacetat, Methyl; oder Aethylglykolsäureacetat; Lactone wie Butyro-, Valerolacton; Säureamide wie Dimethylformamid, Dimethylacetamid, Hexamethylphosphorsäuretriamid; Sulfone wie z.B. Dimethylsulfon, Dibutylsulfon oder Tetramethylensulfon.

Die Lösung kann weitere für die Harze üblichen Zusätze enthalten, wie z.B. Verlaufmittel, Weichmacher, Netzmittel, Farbstoffe, Pigmente, Stabilisatoren, Flammschutzmittel, Photosensibilisatoren oder -aktivatoren, Härter und Härtungsbeschleuniger.

Die Lösung enhält 1 bis 150 g Harz und gegebenenfalls übliche Zusätze pro Liter Lösungsmittel. Als besonders vorteilhafte Konzentration hat sich 1 bis 50 g/l Lösungsmittel erwiesen.

Die Aktivkohle kann pulverförmig, granuliert oder gekörnt sein. Vorteilhaft weist die Aktivkohle einen geringen Aschegehalt auf, um zu grosse Rückstaände bei der Verbrennung der beladenen Aktivkohle zu vermeiden. Die Poren der Aktivkohle können einen Durchmesser von ca. 5 bis 2000 Angström aufweisen. Bevorzugt werden solche Aktivkohlen eingesetzt, die einen wesentliche Anteil Poren mit einem Durchmesser von 25 bis 500 Angström aufweisen. Solche Aktivkohlen sind käuflich. Die Menge der zu verwendenden Aktivkohle richtet sich im wesentlichen nach der gelösten Menge an Polymer und gegebenenfalls Zusätzen.

Die Kontaktzeit beträgt vorzugsweise mindestens 30 Minuten und besonders vorteilhaft mindestens 1 Stunde. Die Kontaktzeit kann je nach Menge an aus der Lösung zu entfernendem Polymer 40 Stunden und mehr betragen.

Das erfindungsgemässe Verfahren kann bei Raumtemperatur durchgeführt werden. Es wurde überraschend gefunden, dass mit höheren Temperaturen eine wesentlich höhere Beladung der Aktivkohle erhielt werden kann. Höhere Temperaturen werden so gewählt, dass sie unterhalb der Siedetemperatur und vorteilhaft z.B. 20°C unter dem Flammpunkt des Lösungsmittels liegen. Ein bevorzugter Temperaturbereich ist 20 bis 100°C.

In einer Ausführungsform des erfindungsgemässen Verfahrens wird bevorzugt pulverförmige Aktivkohle eingesetzt und die Behandlung der organischen Lösung in einem Rührgefäss durchgeführt (Batchverfahren), wobei ein intensiver Kontakt durch kräftiges Rühren erzielt wird. Das gereinigte Lösungsmittel kann dann durch Entfernen der beladenen Aktivkohle erhalten werden, was z.B. durch Filtrieren, Zentrifugieren oder Dekantieren erfolgen kann. Das Batchverfahren kann ein- oder mehrstufig durchgeführt werden, letzteres durch hintereinander geschaltete Gefässe.

In einer anderen Ausführungsform kann das erfindungsgemässe Verfahren auch kontinuierlich durchgeführt werden, wobei bevorzugt gekörnte oder granulierte Aktivkohle verwendet wird, um eine Verstopfung der Kolonnen zu vermeiden. Dieses Verfahren wird so ausgeführt, dass man die Aktivkohle in Kolonnen füllt und die Lösung langsam durchfliessen lässt, um eine ausreichende Kontaktzeit zu erreichen. Hierbei können auch mehrere Kolonnen hintereinander geschaltet werden, Die Kolonnen können als Festbett oder Rutschbett und gegebenenfalls auch als Wirbelbett betrieben werden.

Mit dem erfindungsgemässen Verfahren können in einfacher Weise Polymere aus organischen Lösungen entfernt werden und das Lösungsmittel wiedergewonnen werden. Der Energieaufwand ist gering, eine Erhitzung der Lösung über dem Flammpunkt des Lösungsmittels ist nicht notwendig. Eine Aenderung des Mischungsverhältnisses wird bei Lösungsmittelgemischen nicht beobachtet. Es ist überraschend, dass die gelösten Polymeren gegenüber den Lösungsmitteln bevorzugt adsorbiert werden und dass gleichzeitig auch übliche Zusätze wie z.B. Farbstoffe oder Härter entfernt werden. Je nach Verwendungszweck kann eine weitgehende oder praktisch vollständige Abtrennung der Polymeren erfolgen. Bei Lösungsmitteln, die als Entwickler dienen, genügt eine weitgehende Abtrennung. Die verbrauchte Aktivkohle kann einfach durch Verbrennung beseitigt werden.

Die nachfolgenden Beispiele erläutern die Erfindung näher.

**Beispiel 1:**

In 2544 g eines Gemisches von 50 Gewichtsteilen Propylencarbonat, 30 Gewichtsteilen Diäthylenglykolmono-n-butyläther und 20 Gewichtsteilen γ-Butyrolacton werden 50 g Photopolymerharz (Chalkongruppen enthaltendes Epoxidharz auf Bisphenol-A-Basis) und 6 g Härter auf Bisguanidbasis gelöst. Diese Lösung weist einen Festkörpergehalt von 11,3 g/Liter auf. Zu 100 ml dieser Lösung werden 10 g Aktivkohle (Handelsbezeichnung Carboraffin C) zugegeben und während 1 Stunde bei 28-30°C durch kräftiges Rühren in Kontakt gehalten. Danach wird die Aktivkohle abfiltriert. Das Filtrat weist einen Festkörpergehalt von 0,4 g/Liter auf.

**Beispiel 2:**

Eine Adsorptionsanlage aus 5 Glaskolonnen mit einem Innendurchmesser von 2 cm und einer wirksamen Länge von 145 cm werden in Serie geschaltet. Jede der Säulen wird mit 200 g Kornaktivkohle (BPL 12x30) gefüllt. Durch die Anlage wird eine Lösung von 100 g Harz und 12 g Härter (gemäss Beispiel 1) in 5088 g des in Beispiel 1 beschriebenen Lösungsmittelgemisches geleitet. Bei einer einregulierten Durchflussmenge von 1 ml/min resultiert eine Kontaktzeit von ca. 37 Stunden. Es werden insgesamt ca. 2300 g der Lösung durch die Anlage geleitet. Danach wird am Ausgang der Apparatur der Festkörpergehalt in der Lösung bestimmt. Er beträgt 0,22 g/Liter.

**Beispiel 3:**

In einer Adsorptionsanlage aus hintereinandergeschalteten Glaskolonnen von 20 mm Durchmesser und 1 m Länge wird granulierte Aktivkohle (Chemviron F400, Körnung 12x40) eingefüllt. Es wird eine Lösung gemäss Beispiel 1 mit 5 g/Liter Festkörpergehalt verwendet. Diese Lösung wird in die Säulen gepumpt, so dass eine Kontaktzeit von 3 Stunden pro Kolonne resultiert. Die Kolonnen werden bei einer konstanten Temperatur von 22°C gehalten. Es wird die Menge Lösungsmittel ermittelt, die durch die Kohle geleitet werden kann, bis ein Durchbruch des Kohlebettes erfolgt, d.h. dass die Konzentration am Ausgang der Adsorberkolonne die halbe Eingangskonzentration erreicht. Der Kohleverbrauch beträgt 167 g/Liter Lösungsmittelgemisch.

**Beispiel 4:**

Es wird die gleiche Versuchsanordnung gewählt wie in Beispiel 3. Die Temperatur wird auf 70°C eingestellt. Es resultiert ein Kohleverbrauch von 67 g Kohle/Liter Lösungsmittel.

**Beispiel 5:**

Mit der gleichen Anordnung wie in Beispiel 3 wird bei 120°C Adsorptionstemperatur ein Kohleverbrauch von 40 g Kohle/Liter Lösungsmittel ermittelt.

Aus den Beispielen 3 bis 5 ist ersichtlich, dass mit steigender Temperatur ein wesentlich geringerer Kohleverbrauch resultiert.

**Beispiel 6:**

Ein zylindrisches Reaktionsgefäss (ca. 700 l Inhalt) wird mit Kornaktivkohle (Handelsbezeichnung Chemviron F400) beschickt. Der Reaktor ist mit einem Fördersystem für die Zufuhr frischer Aktivkohle und den Abtransport verbrauchter Aktivkohle ausgerüstet. Ein Kreislaufsystem fördert 100 l/h Harzlösung gemäss Beispiel 1 durch den Reaktor, die extern auf 80°C erwärmt wird. Die Kontaktzeit beträgt ca. 6 Stunden. Bei Ueberschreitung einer Konzentration von 500 mg/l im Regenerat wird jeweils ein Teil der verbrauchten durch frische Kohle ersetzt. Es werden 6000 Liter Lösung mit einer mittleren Konzentration von 6.2 l/g Photopolymerharz und Härter durchgesetzt. Das Regenerat hat eine mittlere Konzentration von 80 mg/l. Es werden 390 kg Kohle verbraucht. Mit 1 kg Kohle werden ca. 90 g Harz und Härter adsorbiert und 11-12 Liter des Lösungsmittelgemisches regeneriert. Eine gaschromatographische Untersuchung zeigt, dass die prozentuale Zusammensetzung des Lösungsmittelgemisches gleich bleibt.

**Patentansprüche**

1. Verfahren zur adsorptiven Entfernung von lichtempfindlichen photopolymerisierbaren Harzen und gegebenenfalls für diese Harze üblichen Zusätzen aus organischen Lösungen, in dem das Harz ein Molekulargewicht von 1 000 bis 500 000 aufweist, und die Lösung 1 bis 150 g des Harzes pro Liter des Lösungsmittels enthält, wobei man die Lösung bei 20 bis 150°C mit 10 bis 500 g Aktivkohle pro Liter des Lösungsmittels in Kontakt bringt und danach das Lösungsmittel isoliert.

2. Verfahren gemäss Anspruch 1, dadurch gekennzeichnet, dass die Kontaktzeit mindestens 30 Minuten beträgt.

3. Verfahren gemäss Anspruch 1, dadurch gekennzeichnet, dass es unterhalb der Siedetemperatur der Lösung, besonders unterhalb des Flammpunktes des Lösungsmittels, durchgeführt wird.

4. Verfahren gemäss Anspruch 1, dadurch gekennzeichnet, dass es mit pulverförmiger Aktivkohle als Batchverfahren durchgeführt wird.

5. Verfahren gemäss Anspruch 1, dadurch gekennzeichnet, dass es mit gekörnter oder granulierter Aktivkohle als kontinuierliches Verfahren durchgeführt wird.

6. Verfahren gemäss Anspruch 1, dadurch gekennzeichnet, dass das Harz ein lichtempfindliches, insbesondere Chalkongruppen enthaldendes Epoxidharz ist.

7. Verfahren gemäss Anspruch 1, dadurch gekennzeichnet, dass das Harz 1,2-substituierte Maleinimidgruppen enthält.

8. Verfahren gemäss Anspruch 1, dadurch gekennzeichnet, dass das Harz Zimtsäurereste enthält.

9. Verfahren gemäss Anspruch 1, dadurch gekennzeichnet, dass das Harz ein Acrylsäure- und/oder Methacrylsäureester bzw. ein Homosowis Copolymer davon mit niedrigen Polymerisationsgrad ist.

10. Verfahren gemäss Anspruch 1, dadurch gekennzeichnet, dass das Harz ein cyclisiertes Rubber-Photoresist ist.

**Claims:**

1. A process for the removal of light-sensitive photopolymerisable resins and, where present, of customary additives for said resins, from organic solutions by adsorption, said resins having a molecular weight of 1 000 to 500,000 and said solutions containing 1 to 150 g of resin per litre of solvent, which process comprises bringing the solution into contact with 10 to 500 g of activated carbon per litre of solvent, in the temperature range from 20° to 150°C, and subsequently isolating the solvent.

2. A process according to claim 1, wherein the contact time is at least 30 minutes.

3. A process according to claim 1, which is carried out at below the boiling temperature of the solution, in particular below the flash point of the solvent.

4. A process according to claim 1, which is carried out as batch process with powdered activated carbon.

5. A process according to claim 1, which is carried out as continuous process with granulated activated carbon.

6. A process according to claim 1, wherein the resin is a light-sensitive epoxy resin which contains in particular chalcone groups.

7. A process according to claim 1, wherein the resin contains 1,2-substituted maleimide groups.

8. A process according to claim 1, wherein the resin contains radicals of cinnamic acid.

9. A process according to claim 1, wherein the resin is an acrylate and/or methacrylate or a homopolymer thereof with a low degree of polymerisation.

10. A process according to claim 1, wherein the resin is a cyclised rubber photoresist.

**Revendications**

1. Procédé pour eliminer de solutions organiques, par adsorption, des résines photopolymérisables et photosensibles et éventuellement des additifs usuels pour ces resimes, dans lequel la résine présente un poids moléculaire de 1000 à 500 000 et la solution contient 1 à 150 g de la résine par litre du solvant, procédé selon lequel on met en contact la solution à 20 jusqu'à 150°C avec 10 à 500 g de charbon actif par litre du solvant et l'on isole ensuite le solvant.

2. Procédé selon la revendication 1, caractérisé en ce que le temps de contact est d'au moins 30 minutes.

3. Procédé selon la revendication 1, caractérisé en ce qulon le conduit au-dessous de la température d'ébullition du solvant, en particulier su-dsssous du point d'inflammation du solvant.

4. Procédé selon la revendication 1, caractérisé en ce qu'il est mis en oeuvre sous forme de procédé discontinu en utilisant du charbon actif pulvérulent.

5. Procédé selon la revendication 1, caractérisé en ce qu'il est mis en oeuvre sous forme de procédé continu en utilisant du charbon actif grenu ou granulé.

6. Procédé selon la revendication 1, caractérisé en ce que la résine est une résine époxyde photosensible, contenant en particulier des groupes chalcones.

7. Procédé selon la revendication 1, caractérisé en ce que la résine contient des groupes maléinimides substitues en 1,2.

8. Procédé selon la revendication 1, caractérisé en ce que la résine contient des restes d'acides cinnamiques.

9. Procédé selon la revendication 1, caractérisé en ce que la résine est un ester d'acide acrylique et/ou d'acide méthacrylique ou um homopolymère ou copolymère de cet ester présentant un faible degre de polymérisation.

10. Procédé selon la revendication 1, caractérisé en ce que la résine est une photoréserve en caoutchouc cyclisé.